# EUROPEAN PATENT APPLICATION

(11) **EP 3 043 038 A1**
(43) Date of publication of application: **13.07.2016**
(21) Application number: 15150829.8
(22) Date of filing: 12.01.2015
(51) Int. Cl.: F01N 3/08, F01N 3/20, F01N 13/00

(54) **NOx reduction system**

(71) Applicant: Inergy Automotive Systems Research (Société Anonyme), 1120 Bruxelles (BE)
(72) Inventor: Berard, Jean-François, 92100 Boulogne Billancourt (FR); Kouakou, Anita, 60200 Compiegne (FR); Van Schaftingen, Jules-Joseph, 1300 Wavre (BE)
(74) Representative: Remy, Vincent Noel Paul

(57) **Abstract**

A system and method for reducing the nitrogen oxides found in the exhaust produced by a vehicle engine, the system comprising a NOx trap and a first adding means for adding a reducing agent to the exhaust gas. The first adding means is positioned downstream of the engine and either upstream of or within the NOx trap.

## Description

### Field of Invention

The invention relates to a system and method for reducing the nitrogen oxides found in the exhaust gas produced by a vehicle engine.

### Background

Emissions from vehicle engines are of increasing concern to governments and organisations around the world. There, therefore, exists the need for emission control technologies.

Known emission control technologies include systems for reducing the nitrogen oxides (i.e. NO, NO₂) of exhaust gas produced by a vehicle engine. Such technologies include Selective Catalytic Reduction (SCR) and Lean NOx Traps (LNT). The SCR and LNT systems are provided in the exhaust line of a vehicle.

Selective Catalytic Reduction is a process used for converting the nitrogen oxides (NOx) produced by a vehicle engine into diatomic nitrogen (N₂) and water (H₂O). Suitable catalysts for use in Selective Catalytic Reduction include base metal catalysts such as vanadium and tungsten. In a Selective Catalytic Reduction unit, the reduction of the NOx generally takes place in a catalytic chamber. Before the NOx gases pass into this chamber they are mixed with a reducing agent. Suitable reducing agents include liquid urea solution (for example, AdBlue®) and gaseous ammonia.

A SCR catalyst can only operate once the engine has reached a temperature of about 120°C to 180°C but this can take several minutes in cold start-up conditions or at low engine load. Temperatures of around 180°C are required when the reducing agent is a liquid urea solution such as AdBlue® and temperatures of approximately 120°C are needed when the reducing agent is gaseous ammonia.

Lean NOx Traps are NOx absorbers which chemically bind NOx during lean operation of a vehicle engine. Lean NOx Traps comprise ceramic cordierite honeycomb structures coated with fine-grained oxides such as aluminum oxide (Al₂O₃), catalytically active materials (namely the platinum group metals platinum (Pt), palladium (Pd) and rhodium (Rh)), alkaline oxides or carbonates (for example, of barium (Ba) or sodium (Na)), and oxygen storage components (typically ceria-zirconia solid solutions).

During lean operation of an engine, fuel is burned with an excess of air. This means that during lean operation of the engine, the NOx trap is provided with oxygen which is used to oxidise NO to NO₂. The NOx (NO and NO₂) can be absorbed onto the surface of the NOx trap by the alkaline oxides or carbonates. However, the absorption sites on the NOx trap will eventually become saturated and the NOx trap will not be able to bind with any more NOx.

When the absorber capacity of the NOx trap is saturated, the vehicle engine needs to be switched to rich mode. In contrast to lean engine operation, during rich engine operation an air/fuel ratio which provides exactly enough air to burn all of the fuel is used. This means that the oxygen in the NOx trap is replaced by reducing species (such as H₂, CO and hydrocarbons). This results in the NOx absorbed by the NOx Trap being reduced to N₂ over a reduction catalyst. The N₂ is then released from the trap.

However, when a vehicle engine is operated in rich mode, there is increased fuel consumption.

Additionally, when exhaust gases are being produced by the engine but the exhaust line is not warm enough for the SCR catalyst to operate properly, solid components and deposits are formed in the exhaust pipe. For example, solid deposits are formed when AdBlue® is injected into a SCR at temperatures below 180°C. Such deposits may cause fouling or clogging of components of the system.

### Summary

The object of the present invention is to provide an improved NOx reduction system. The present invention, therefore, provides a system for reducing nitrogen oxides of an exhaust gas produced by an engine of a vehicle, the system comprising a NOx trap, and a first adding means for adding a reducing agent to the exhaust gas, wherein the first adding means is positioned downstream of the engine and either upstream of or within the NOx trap.

In positioning the first adding means for adding a reducing agent to the exhaust gas upstream or within the NOx trap, the added reducing agent can be used to purge the NOx trap. As explained above, it has previously been necessary to switch the engine to rich mode to purge a NOx trap. The present invention, therefore, removes the need to switch to engine rich mode and resulting a fuel saving. The purge of the NOx trap can also be activated by a combination of ammonia injection and reduced rich engine operation, also resulting in a saving of fuel.

Preferably, the first adding means is positioned upstream of the NOx trap.

Preferably, the NOx trap is a lean NOx trap (LNT). Suitable materials for use in the LNTs of the present invention are disclosed by US patent no. US 8,853,123, US patent application US 2002/0076373, and the article entitled "Novel low temperature NOx storage-reduction catalysts for diesel light-duty engine emissions based on hydrotalcite compounds" published in Catalysis Today (Volume 75, issues 1 to 4, 3 July 2002, pages 421-429), for example.

US 8,853,123 describes a LNT catalyst with enhanced Nitrogen Oxide storage capacity at low temperature and significantly inhibited thermal desorption. This LNT catalyst is said to be prepared by coating a washcoat on a honeycomb-type carrier and drying and baking the same. The washcoat contains a first catalyst powder in which barium (Ba) and a precious metal are supported on a ceria support, and a second catalyst powder in which a precious metal is supported on a magnesium (Mg) substituted alumina support.

US 2002/0076373 describes the use of lithium in NOx adsorbers for improved low temperature performance. In this patent application, a combination of lithium and alkali material and/or alkaline earth material are said to enable the low temperature reduction of NOx to molecular nitrogen.

In the paper published in Catalysis Today, the presence of dispersed Mg(Al)O oxide is said to promote the low temperature storage of NOx.

In some embodiments of the invention, the first adding means may comprise a nozzle for spraying or squirting the reducing agent into the exhaust gas.

Preferably, the reducing agent is ammonia. The ammonia is preferably provided in liquid or gaseous form.

NOx reduction systems of the present invention may be connected to a tank for storing an ammonia precursor such as, for example, urea or a concentrated urea solution of at least 10% urea up to 35 wt% urea in water. This tank for storing an ammonia precursor is connected to an ammonia precursor decomposition unit for generation of ammonia, wherein the urea decomposition unit is in fluid communication with the adding means. In one particular embodiment the ammonia precursor may be a liquid ammonia precursor; in particular, it can be a solution. In another embodiment, the ammonia precursor may be a solid.

In an embodiment of the invention, there is a provided a tank for storing the products resulting from the decomposition of the ammonia precursor.

Preferably, the system further comprises a first Selective Catalytic Reduction unit, wherein this first Selective Catalytic Reduction unit is located downstream of the NOx trap. In some embodiments of the invention, the NOx trap and the first Selective Catalytic Reduction unit may be located within the same canning or casing. A combined unit has the advantages of being more compact and avoiding heat loss between the NOx trap and the first Selective Catalytic Reduction unit.

More preferably, the system further comprises a second Selective Catalytic Reduction unit, wherein the second Selective Catalytic Reduction unit is located downstream of the first Selective Catalytic Reduction unit.

The system may also further comprise a second adding means for adding a reducing agent to the exhaust gas, wherein this second adding means is located upstream of at least one Selective Catalytic Reduction unit. Therefore, in embodiments with a single Selective Catalytic Reduction unit, the second adding means can be located upstream of this first Selective Catalytic Reduction unit. In embodiments with a first and second Selective Catalytic Reduction unit, the second adding means can be located upstream of both the first and second Selective Catalytic Reduction units or only the second Selective Catalytic Reduction unit.

The second adding means is also adapted to add a reducing agent to the exhaust gas, for example, by squirting or spraying the reducing agent into the exhaust line. In embodiments of the invention, the second adding means may comprise a nozzle for spraying or squirting the reducing agent into the exhaust gas. The reducing agent is preferably ammonia, preferably in liquid or gaseous form.

Preferably, the system for reducing nitrogen oxides of an exhaust gas produced by an engine of a vehicle of the present invention further comprises at least one sensor and a controller, wherein the controller is configured to receive sensed data from the at least one sensor and to control at least one of the adding means based on the sensed data from the at least one sensor.

Therefore, in embodiments of the invention with only a first adding means, a controller configured to receive sensed data from the at least one sensor can control the first adding means based on the sensed data.

In embodiments with a first and second adding means, the controller may be configured to control only one of the first or second adding means, or the controller may control both the first and second adding means based on the sensed data. If there are further adding means, the controller may also control these.

In some embodiments, the system may comprise a NOx sensor located downstream of the NOx trap and a controller is configured to receive sensed data from the NOx sensor and to control at least one of the adding means based on the data received from the NOx sensor. Therefore, the controller may be configured to control at least the first and/or the second adding means based on the data received from the NOx sensor. For example, in embodiments with only a first adding means, this first adding means can be controlled based on the data received from the NOx sensor.

Embodiments of the invention may comprise multiple NOx sensors, for example, two NOx sensors, wherein one of these NOx sensors is located downstream of the NOx trap and upstream of a SCR unit and the other NOx sensor is located downstream of this SCR unit. In such embodiments, the controller is configured to receive sensed data from the multiple NOx sensors and control the adding of the reducing agent based on at least the sensed NOx data.

Additionally or alternatively, the system may comprise a temperature sensor, wherein the controller is configured to control at least one of the adding means based on the temperature sensed by the temperature sensor. The controller may be configured to control at least the first and/or the second adding means based on the temperature sensed by the temperature sensor.

In some embodiments, the system may be provided with multiple temperature sensors. For example, the system may have a first temperature sensor in or in close proximity to the NOx trap, and a second temperature sensor in or in close proximity to a SCR unit. In such embodiments, the controller is configured to receive data from the multiple temperature sensors and to control one or more of the adding means based on at least this sensed temperature data.

In some embodiments, the system may comprise multiple NOx and/or temperature sensors. In these embodiments, the controller is configured to receive sensed data from the multiple sensors and to control one or more of the adding means based on the data received from the sensors.

Preferably, the at least one of the adding means is configured to inject the reducing agent in the gas phase. Therefore, the first and/or second adding means may be configured to add the reducing agent in the gas phase.

In some embodiments, the first adding means are arranged to spray reducing agent in an exhaust line of the vehicle between the engine and the NOx trap.

Preferably, the system of the present invention is located within an exhaust line of the vehicle.

Embodiments of the system of the invention may also be provided with a diesel oxidation catalyst (DOC) unit downstream of the engine and upstream of both the NOx trap and the first adding means. As DOC unit is configured to promote oxidation of exhaust gas components by oxygen it should be located upstream of the first adding means or the reducing agent may be oxidized by the DOC.

In a further aspect of the invention there is provided a controller configured to receive data indicative of a measured parameter in an exhaust system and control adding a reducing agent upstream of a NOx trap or within a NOx trap and downstream of an engine based on the received data.

In embodiments of this further aspect of the invention, the controller may be configured to receive data indicative of a NOx content in an exhaust gas and control the adding of a reducing agent upstream of a NOx trap or within a NOx trap (and downstream of an engine) based on the received NOx content data.

In other embodiments, the controller may additionally or alternatively be configured to receive data indicative of the temperature of the exhaust system and control the adding of a reducing agent upstream of a NOx trap or within a NOx trap (and downstream of an engine) based on the received temperature data.

In another aspect of the invention there is provided an assembly for use in reducing nitrogen oxides of exhaust gas produced by an engine of a vehicle, the assembly comprising a NOx trap, a first adding means for adding a reducing agent to the exhaust gas, and a controller configured to receive data indicative of a measured parameter, wherein the first adding means is positioned downstream of the engine and either upstream or within the NOx trap, and the controller is configured to control adding a reducing agent upstream of a NOx trap or within a NOx trap based on the received data.

The optional further features of the other aspects of the invention described above also apply to this assembly.

In a further aspect of the invention there is a method for reducing nitrogen oxides of an exhaust gas produced by an engine, the method comprising: storing nitrogen oxides produced by an engine in a NOx trap positioned downstream of the engine; adding a reducing agent into the exhaust gas upstream of or within the NOx trap and downstream of the engine; and using this reducing agent to reduce the NOx absorbed in the NOx trap and purge the NOx trap.

Preferably, the reducing agent is ammonia.

The method preferably further comprises using the reducing agent to reduce NOx in a Selective Catalytic Reduction (SCR) unit positioned downstream of the NOx trap.

Preferably, the method comprises measuring a parameter and using this parameter to control the addition of the reducing agent, wherein the measured parameter may be a NOx content of the exhaust gas or a temperature.

The temperature may be the temperature of the exhaust gas coming from the engine. Preferably, the reducing agent is added once a required temperature is reached. The required temperature may be around 120 to 180°C, preferably, 120 to 140°C.

The NOx content of the exhaust gas may be measured downstream of the NOx trap and/ or downstream of a SCR unit

### Brief description of the figures

The accompanying drawings are used to illustrate presently preferred non-limiting exemplary embodiments of the present invention. The above and other advantages of the features and objects of the invention will become more apparent and the invention will be better understood from the following detailed description when read in conjunction with the accompanying drawings, in which:
Figure 1 is a diagram illustrating a first embodiment of a system for reducing NOx;
Figure 2 is a diagram illustrating a second embodiment of a system for reducing NOx;
Figure 3 is a diagram illustrating a third embodiment of a system for reducing NOx;
Figure 4 is a diagram illustrating a fourth embodiment of a system for reducing NOx;
Figure 5 is a diagram illustrating a fifth embodiment of a system for reducing NOx;
Figure 6 is a diagram illustrating a sixth embodiment of a system for reducing NOx;
Figure 7 is a diagram illustrating a seventh embodiment of a system for reducing NOx;
Figure 8 is a diagram illustrating an eighth embodiment of a system for reducing NOx;
Figure 9 is a diagram illustrating a ninth embodiment of a system for reducing NOx;
Figure 10 is a diagram illustrating a tenth embodiment of a system for reducing NOx; and
Figure 11 is a diagram illustrating an eleventh embodiment of a system for reducing NOx.

### Description of embodiments

The figures show embodiments of a system for reducing nitrogen oxides found in the exhaust gas produced by an engine 1 of a vehicle. In all of the embodiments, the systems comprise a NOx trap 3 and a first adding means 5 for adding a reducing agent to the exhaust gas, wherein the first adding means 5 is located downstream of the vehicle engine 1 and upstream of the NOx trap 3.

In alternative embodiments of the invention, the first adding means 5 may be located within the NOx trap 3.

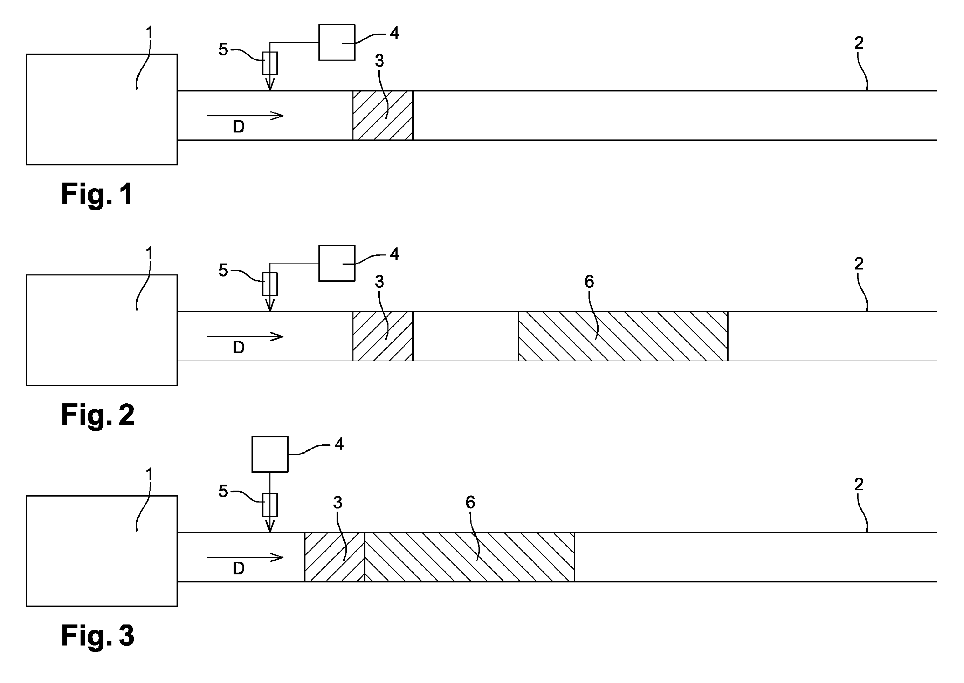

In all of Figures 1 to 11, the arrow D shows the movement of the exhaust gas in the downstream direction. In addition, the systems are all located within an exhaust line 2.

In the embodiments of all of the figures, the first adding means 5 comprises some form of outlet connected to the exhaust line. For example, the means may comprise an injector or a spray with an outlet nozzle adapted to inject or spray the reducing agent in liquid or gaseous form into the exhaust line 2. Preferably, the reducing agent is liquid or gaseous ammonia.

The reducing agent is supplied from the store 4 of reducing agent. This store 4 may be a store of ammonia. Alternatively, in some embodiments of the invention, the store 4 may hold urea and the reducing agent store 4 further comprises a urea decomposition section configured to convert urea solution into ammonia for supply to the first adding means 5.

When the systems of all of the embodiments of Figures 1 to 11 are in use, exhaust gases comprising nitrogen oxides are generated by the engine 1. These exhaust gases move down the exhaust line 2 in direction D and pass through a NOx trap 3 positioned downstream of the engine 1.

Preferably, when the exhaust system is at low temperature (for example, just after the engine has been started-up or when the engine is operating at low engine load), the NOx generated by the engine is stored in the NOx trap 3. In order to purge the NOx trap 3, reducing agent is injected into the exhaust gases upstream of the NOx trap 3 by the first adding means 5.

In the embodiment of Figure 1, the system just comprises a NOx trap 3. When the system of Figure 1 is in use, reducing agent is injected or sprayed into the exhaust line 2 upstream of the NOx trap 3. The injected/sprayed reducing agent is then used by the NOx trap to reduce the absorbed NOx to diatomic nitrogen (N₂).

Preferably, the system also comprises at least one first Selective Catalytic Reduction (SCR) unit. Such preferred embodiments of the invention are illustrated by Figures 2 to 11.

In all of the embodiments of Figures 2 to 11, the systems comprise a NOx trap 3, a first adding means 5 and a first Selective Catalytic Reduction (SCR) unit 6, wherein this SCR unit 6 is located downstream of both the engine 1 and the NOx trap 3. Therefore, the first adding means 5 is located downstream of the vehicle engine 1 and upstream of both the NOx trap 3 and the SCR unit 6.

When the systems of the embodiments of Figures 2 to 11 are in use, exhaust gases comprising nitrogen oxides are generated by the engine 1. These exhaust gases move down the exhaust line 2 in direction D. The exhaust gases firstly pass through a NOx trap 3 positioned downstream of the engine 1, before then passing through a first SCR unit 6 located downstream of the NOx trap 3.

Preferably, when the system is at low temperature, the NOx generated by the engine 1 is stored in the NOx trap 3 positioned upstream of the SCR unit 6. When the system is warm enough (for example, around 120°C to 180°C or warmer) for the SCR unit 6 to function properly and reduce the NOx to diatomic nitrogen (N₂) and water (H₂O), reducing agent can be injected upstream of the NOx trap 3, resulting in both a purge of the NOx trap and reduction of NOx in the SCR unit 6. The injected reducing agent is thus used to both purge the NOx trap 3 and reduce the NOx in the SCR unit 6.

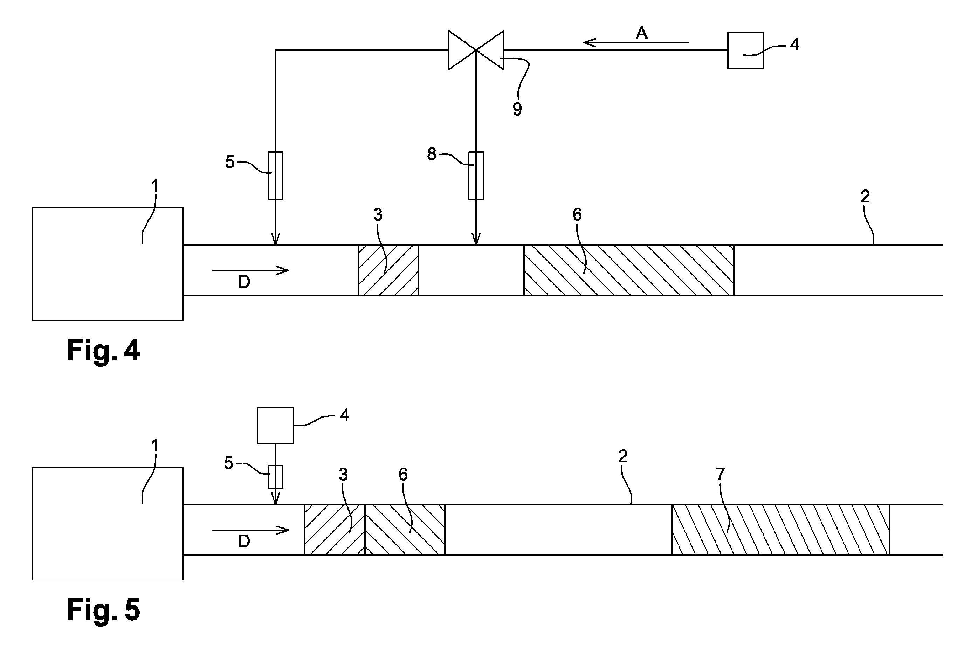

Figures 2, 3 and 4 illustrate embodiments of the invention with only a single SCR unit 6. In Figures 2 and 4, the NOx trap 3 and the SCR 6 unit are spaced apart within the exhaust line 2. In the embodiments of Figures 2 and 4, the distance between the engine 1 and the NOx trap 3 is around 10 to 50 cm.

In the embodiment of Figure 3, the NOx trap 3 and SCR unit 6 are located within the same canning. This combined NOx trap 3 and SCR unit 6 is also positioned around 10 to 50 cm along the exhaust line 2 from the engine. The combined unit has the advantage of avoiding heat loss between the NOx trap 3 and the SCR unit 6. The combined NOx trap 3 and SCR unit 6 is also more compact.

In the embodiments of Figures 5 to 8, the systems comprise a second SCR unit 7 in addition to the first SCR unit 6. This second SCR unit 7 is located downstream of all of the engine 1, the NOx trap 3 and the first SCR unit 6. A second SCR unit 7 may be useful if the space for the first SCR unit 6 near the engine 1 is too small to host the full volume of the SCR catalyst.

When the embodiments of Figures 5 to 8 are in use, the exhaust gas will pass through the NOx trap 3, the first SCR unit 6 and then the second SCR unit 7. If there is any NOx remaining in the exhaust gas after it has passed through the NOx trap 3 and the first SCR unit 6, this should be reduced to into diatomic nitrogen (N₂) and water (H₂O) by the second SCR unit 7. Therefore, providing a second SCR unit 7 can help ensure that the NOx content of the exhaust gas leaving the vehicle is zero or very low.

In the embodiments of Figures 4, 6, 7, 8 and 10, the system is additionally provided with an additional adding means 8 (for example, an injector/spray with an outlet nozzle) positioned upstream of at least one SCR unit 6, 7. In addition, the system is provided with a device 9 to distribute the reducing agent between the first adding means 5 and the second adding means 8. This device 9 could be a three-way valve, for example. In the embodiments shown in these figures, the reducing agent moves in direction A from the reducing agent store 4.

When the embodiments of Figures 4, 6, 7, 8 and 10 are in use and the exhaust system is at low temperature (for example, just after start-up or at low engine load), the NOx generated by the engine 1 is stored in the NOx trap 3. When the NOx trap 3 becomes saturated, NOx will no longer be absorbed by the NOx trap 3 and will instead pass through the NOx trap 3 (i.e. "NOx slip" will occur).

In these circumstances, if at least one of the SCR units 6, 7 located downstream of the second adding means 8 reaches its operating temperature before the NOx trap reaches its operating temperature, reducing agent can be injected upstream of the relevant SCR unit 6, 7 by the second adding means 8. Injection of reducing agent upstream of this SCR unit 6, 7 allows the NOx that has passed through the NOx trap 3 to be reduced by the SCR unit 6, 7 that has reached its operating temperature without purging the NOx trap 3. When the system is sufficiently warm (i.e. when the NOx trap has reached its operating temperature), reducing agent will then be injected upstream of the NOx trap 3 by the first adding means 5 resulting in a purge of the NOx trap 3 in addition to reduction of the NOx by the reducing agent in one or more SCR units 6, 7.

An SCR unit 6, 7 may have a lower operating temperature than that of the NOx trap 3 if gaseous ammonia is used as the reducing agent, for example. If the reducing agent is gaseous ammonia, the operating temperature of the SCR units 6, 7 may be around 120°C.

In an alternative mode of operation, the NOx trap may reach its operating temperature before at least one of the SCR units 6, 7 reaches its operating temperature. In these circumstances, when the NOx trap has reached its operating temperature, reducing agent will be injected upstream of the NOx trap 3 by the first adding means 5 resulting in a purge of the NOx trap 3. Reducing agent will only be injected by the second adding means 8 when the system is sufficiently warm for the SCR unit 6, 7 downstream of the second adding means 8 to operate.

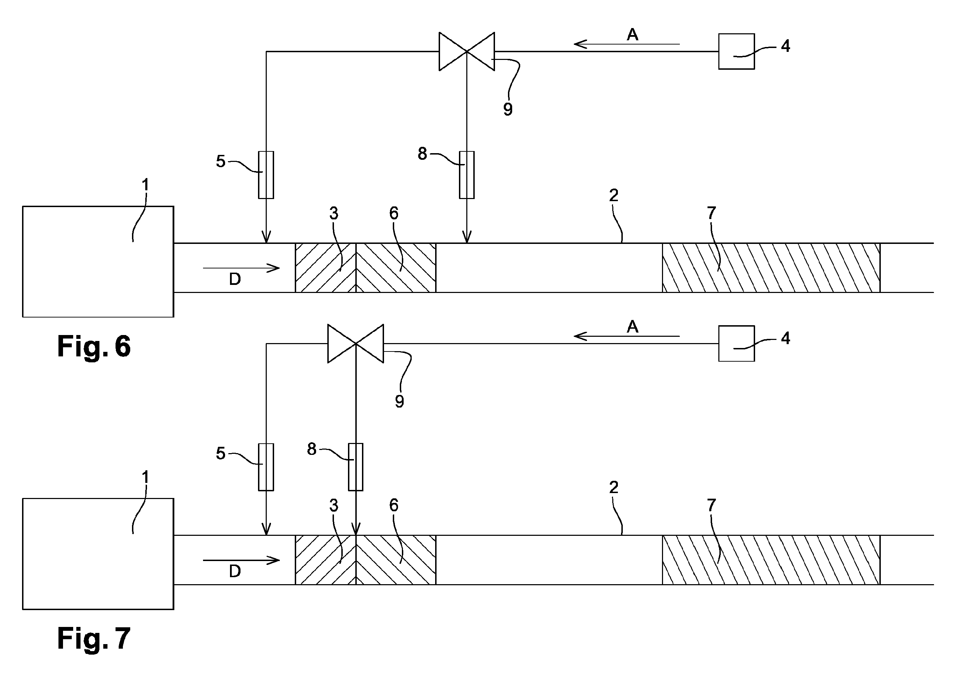

In the embodiments with two SCR units (shown Figures 6, 7 and 8), the first SCR unit 6 is likely to reach its required operating temperature before the second SCR unit 7 as it is positioned closer to the engine 1.

The embodiment shown in Figure 6 is a combination of the embodiments of Figures 4 and 5, i.e. the embodiment of Figure 6 has both a second SCR unit 7 and a second adding means 8. When the system of Figure 6 is in use, the NOx generated by the engine 1 will be stored by the NOx trap 3 when the system is at low temperature (for example, just after start-up or at low engine load). If the NOx trap 3 was to eventually become saturated with NOx, no further NOx will be absorbed by the NOx trap 3 and the NOx will instead pass through the NOx trap 3 (the "NOx slip"). Once the SCR unit 7 has reached its operating temperature, reducing agent can be injected by the second adding means 8 at an injection point positioned upstream of the second SCR unit 7, allowing the second SCR unit 7 to reduce the non-absorbed NOx without purging the NOx. Subsequently, when the SCR units 6, 7 are sufficiently warm, reducing agent is injected by a first adding means 5, i.e. reducing agent is injected upstream of the NOx trap 3, resulting in the purge of the NOx trap 3 and a reduction of the NOx in the first and second SCR units 6, 7.

In the system illustrated by Figure 7, the second adding means 8 is positioned upstream of the first SCR unit 6 instead of downstream of this unit as shown in Figure 6.

When the system of Figure 7 is in use, the NOx trap 3 will trap the NOx generated by the engine 1 when the system is at low temperature. As with the embodiments of Figures 4 and 6, the reducing agent can be injected upstream of a SCR unit 6, 7 by the second adding means 8 when the NOx trap 3 has become saturated and is no longer absorbing any NOx (i.e. "NOx slip" is occurring) provided that at least one of the SCR units 6, 7 has reached its operating temperature. Normally, SCR unit 6 will reach its operating temperature before SCR unit 7 as it is closer to the engine 1. This allows the NOx escaping from the NOx trap 3 to be reduced by an SCR unit 6, 7 without purging the NOx trap 3. Then, when the NOx trap 3 is sufficiently warm, reducing agent is sprayed upstream of the NOx trap 3 by the first adding means 5 to purge the NOx trap 3. The NOx will then be reduced by the NOx trap as well as the first and second SCR units 6, 7.

It may be advantageous to use the embodiment of Figure 7 as opposed to the embodiment of Figure 6. In the system shown in Figure 6, the added reducing agent is used by the second SCR unit 7. However, in the embodiment of Figure 7, the added reducing agent is used by both the first SCR unit 6 and the second SCR unit 7. The first SCR unit 6 is closer to the engine 1 and so will generally become warmer faster than the second SCR unit 7.

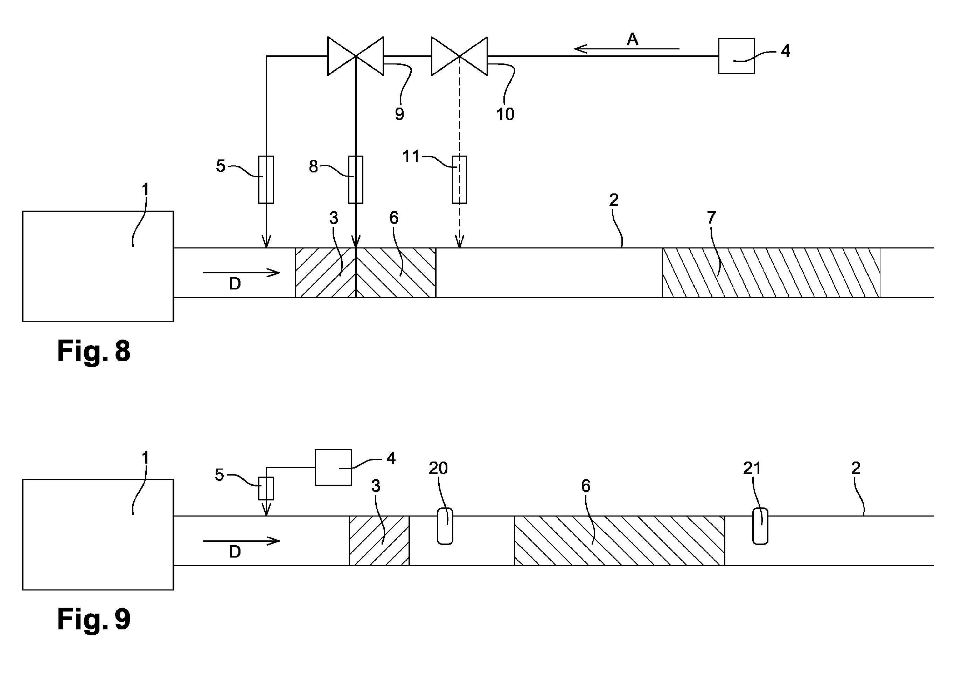

In the embodiment of Figure 8, an optional third adding means 11 has been added to the system of Figure 7. This third adding means 11 (for example, an injector or a spray comprising a nozzle) is positioned downstream of the first SCR unit 6 and upstream of the second SCR unit 7. The system is provided with a second device 10 for distributing the reducing agent between the third adding means 11 and the first and second adding means 5, 8. This second device 10 could be a three-way valve, for example.

In the embodiment of the system illustrated by Figure 9, the system additionally comprises two NOx sensors 20, 21. Apart from the sensors, the general set-up of the system is substantially identical to that shown in Figure 2.

The first NOx sensor 20 is positioned downstream of the NOx trap 3 and upstream of the SCR unit 6. The second NOx sensor is positioned downstream of the SCR unit 6.

When the system of Figure 9 is in use, the NOx trap 3 will accumulate NOx when the system is cold. At this point, no reducing agent has been injected. The temperature of the system can either be measured by a temperature sensor (not shown) or the temperature of the system can be estimated (for example, by assuming that the system will remain cold for x minutes after the engine has been started up, or by using a more sophisticated algorithm that takes into account the engine loads and associated durations).

When the first NOx sensor 20 detects NOx, this means that the NOx trap 3 is saturated and it is no longer absorbing NOx. Under these circumstances, the reducing agent is sprayed into the system by the first adding means 5 and the NOx trap 3 is purged. The NOx trap 3 can then proceed to absorb more NOx.

When the system becomes sufficiently warm (detected, for example, by a temperature sensor), reducing agent is injected into the system again so that there is reducing agent available to reduce the NOx in the SCR unit 6. Furthermore, the injected reducing agent will also purge the NOx trap 3. This will ensure that the NOx trap 3 maintains NOx absorption ability which is desirable if the engine is then turned off and later restarted.

The system of Figure 9 is also provided with a second NOx sensor 21. This NOx sensor 21 is used to monitor the operation of the SCR unit 6 to check that it is working properly.

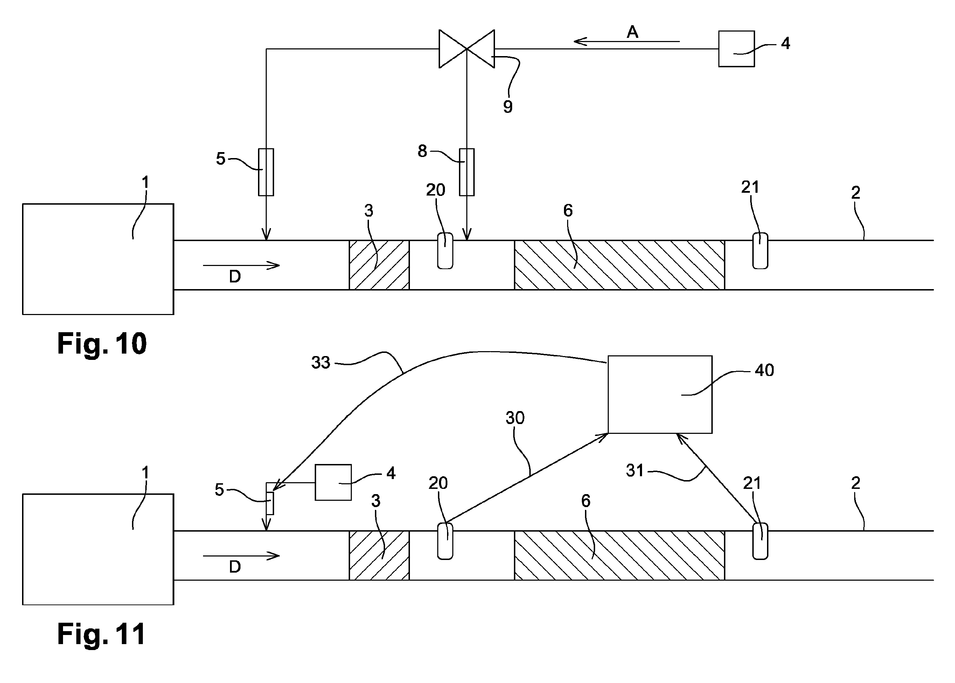

The system shown in Figure 10 also comprises two NOx sensors 20, 21. Apart from the sensors 20, 21, the general set-up of this embodiment is the same as that shown in Figure 4. This embodiment differs from the embodiment of Figure 9 in that the system comprises two adding means: a first and a second adding means 5, 8.

When the system of Figure 10 is in use, the NOx trap 3 accumulates the NOx when the system is cold. No reducing agent is injected at this point. Again, the temperature can be measured by a temperature sensor (not shown) or the temperature of the system can be estimated (for example, by assuming that the system will remain cold for x minutes after the engine has been started up, or by using a more sophisticated algorithm that takes into account the engine loads and associated durations).

In the system of Figure 10, the NOx trap 3 may operate at a lower temperature than the SCR unit 6 or *vice versa*.

If the NOx trap operates at a lower temperature, when the temperature of the system is determined to be too low (for example, less than 140°C) for the SRC unit 6 to operate, and when the first NOx sensor 20 detects the presence of any NOx, reducing agent is injected into the exhaust line 2 by the first adding means 5 to purge the NOx trap 3. In the presence of reducing agent, the NOx trapped on the NOx trap will be reduced to N₂.

In this situation, the reducing agent will be injected by the second adding means 8 when the system becomes sufficiently warm (detected, for example, by a temperature sensor) to ensure that there is reducing agent available to reduce the NOx in the SCR unit 6.

As with the system of Figure 9, further injection of reducing agent by the first adding means 5 also ensures that the NOx trap has a low NOx content meaning that it would still have absorption ability if the engine is turned off and then restarted.

Alternatively, if the SCR unit 6 can operate at a lower temperature than the NOx trap 3, the system will reach a temperature at which the SCR unit 6 can operate before the NOx trap 3 can work. This can occur if ammonia gas is being used as the reducing agent, for example.

In these circumstances, when the first NOx sensor 20 detects the presence of any NOx, if the SCR unit 6 has reached its operating temperature, reducing agent can be injected upstream of the SCR unit 6 by the second adding means 8. Injection of reducing agent upstream of the SCR unit 6 allows the NOx that has passed through the NOx trap 3 to be reduced by the SCR unit 6 without purging the NOx trap 3. When the system is sufficiently warm, reducing agent will then be injected upstream of the NOx trap 3 by the first adding means 5 resulting in a purge of the NOx trap 3 in addition to reduction of the NOx by the reducing agent in the SCR unit 6.

Again, further injection of reducing agent by the first adding means 5 ensures that the NOx trap has a low NOx content meaning that it would still have absorption ability if the engine is turned off and then restarted.

As with the embodiment of Figure 9, the system of Figure 10 is provided with a second NOx sensor 21 positioned downstream of the SCR unit 6. This NOx sensor 21 is used to monitor the operation of the SCR unit 6 to check that it is working properly.

In alternative embodiments of the invention, a system may be provided with only a single NOx sensor, for example, with either the first or second sensor 20, 21.

In the final figure, Figure 11, the substantially identical to the system shown in Figure 9 except that the system further comprises a controller 40 configured to receive data from the NOx sensors 20, 21. The controller is also configured to control the first adding means 5 based on the data received from the sensors 20, 21. In the illustration of Figure 11, the data transmitted to the controller 40 from sensor 20 is shown by line 30, the data transmitted to the controller from the sensor 21 is shown by line 31, and the control instruction sent to the first adding means 5 is shown by line 33.

In an alternative embodiment of the system of Figure 11, the system may be provided with a temperature sensor in addition to or instead of a NOx sensor. The data recorded by the temperature sensor can then be transmitted to the control means 40, and the control means 40 can use this temperature data to control the first adding means 5.

In further alternative embodiments, the controller 40 can control multiple adding means, for example, first and second 5, 8 adding means using the data receiving from the NOx and/or temperature sensor(s).

In all of the above described embodiments, in addition to spraying reducing agent upstream of the NOx trap 3 to purge the trap when it is saturated, reducing agent may also be sprayed upstream of the NOx trap 3 when it is not saturated to keep the NOx trap 3 ready to absorb NOx at all times. This is advantageous as it means that the NOx trap 3 will be ready to absorb NOx should the engine 1 be restarted. Reducing agent such as ammonia may be sprayed upstream of the NOx trap 3 at regular time intervals, for example.

## Claims

1. A system for reducing nitrogen oxides of an exhaust gas produced by an engine of a vehicle, the system comprising:
- a NOx trap; and
- a first adding means for adding a reducing agent to the exhaust gas;
wherein the first adding means is positioned downstream of the engine and either upstream of or within the NOx trap.

2. The system of Claim 1, wherein the system further comprises a first Selective Catalytic Reduction unit; wherein the first Selective Catalytic Reduction unit is located downstream of the NOx trap.

3. The system of Claim 2, wherein the system further comprises a second Selective Catalytic Reduction unit; wherein the second Selective Catalytic Reduction unit is located downstream of the first Selective Catalytic Reduction unit.

4. The system of Claim 2 or 3, wherein the system further comprises a second adding means for adding a reducing agent to the exhaust gas; wherein the second adding means is located upstream of at least one Selective Catalytic Reduction unit.

5. The system of any preceding claim, wherein the reducing agent is ammonia.

6. The system of any preceding claim, wherein the system further comprises:
- at least one sensor; and
- a controller configured to receive sensed data from the at least one sensor and to control at least one of the adding means based on the sensed data from the at least one sensor.

7. The system of Claim 6, wherein the system comprises:
- a NOx sensor located downstream of the NOx trap; and
- the controller is configured to receive sensed data from the NOx sensor and to control at least one of the adding means based on the sensed data from the NOx sensor.

8. The system of Claim 6 or 7, wherein the system comprises:
- a temperature sensor; and
- the controller is configured to control at least one of the adding means based on the temperature sensed by the temperature sensor.

9. The system of any preceding claim, wherein at least one of the adding means is configured to inject the reducing agent in the gas phase.

10. The system of any preceding claim, wherein the first adding means are arranged to spray the reducing agent in an exhaust line extending between the engine and the NOx trap.

11. The system of any preceding claim, wherein the system is located within an exhaust line of the vehicle.

12. A controller configured to:
- receive data indicative of a measured parameter in an exhaust system; and
- control adding a reducing agent upstream of a NOx trap or within a NOx trap and downstream of an engine based on the received data.

13. The controller of Claim 12, wherein the controller is configured to:
- receive data indicative of a NOx content in an exhaust gas; and
- control the adding of a reducing agent upstream of a NOx trap or within a NOx trap, based on the received NOx content data.

14. The controller of Claim 12 or 13, wherein the controller is configured to:
- receive data indicative of the temperature of the exhaust system; and
- control the adding of a reducing agent upstream of a NOx trap or within a NOx trap, based on the received temperature data.

15. A method for reducing nitrogen oxides of an exhaust gas produced by an engine, the method comprising:
- storing nitrogen oxides produced by an engine in a NOx trap positioned downstream of the engine;
- adding a reducing agent into the exhaust gas upstream of or within the NOx trap and downstream of the engine; and
- using this reducing agent to reduce the NOx absorbed in the NOx trap and purge the NOx trap.
